# EUROPEAN PATENT APPLICATION

(11) **EP 1 470 996 A2**
(43) Date of publication of application: **27.10.2004**
(21) Application number: 03019670.3
(22) Date of filing: 08.09.2003
(51) Int. Cl.: B62K 21/12

(54) **Bicycle stem with angle adjustment mechanism**

(30) Priority: 21.04.2003 CN 03225442
(71) Applicant: Hsin Lung Corp. (ShenZhen) Co. Ltd., Shenzhen 518109 (CN)
(72) Inventor: Liao, Hsueh-Hu, Hsin Chu Hsien 303 Taiwan (TW)
(74) Representative: VOSSIUS & PARTNER

(57) **Abstract**

The present invention relates to a bicycle stem comprising a quill 54, an extension member 300, and a connecting mechanism 52 for connecting said quill to said extension mechanism, wherein said connecting mechanism 52 comprises a quick release mechanism.

## Description

The present invention relates to a bicycle stems, and more particularly to quill-type bicycle stems.

A typical bicycle includes a front fork assembly coupled to a head tube of a frame. The front fork assembly includes a steerer and two blades extending from the steerer. The two blades connect to an axle of a front wheel on either side of the front wheel. The steerer passes through the head tube of the frame, and a stem connects a handlebar to a top end of a steerer. A rider uses the handlebar to rotate the steerer to steer the bicycle.

Many bicycles use "quill-type" stems that fit inside the steerer and use an expander bolt/wedge assembly to attach to the steerer. Other bicycles use "threadless" stems that clamp to an outside surface of the steerer.

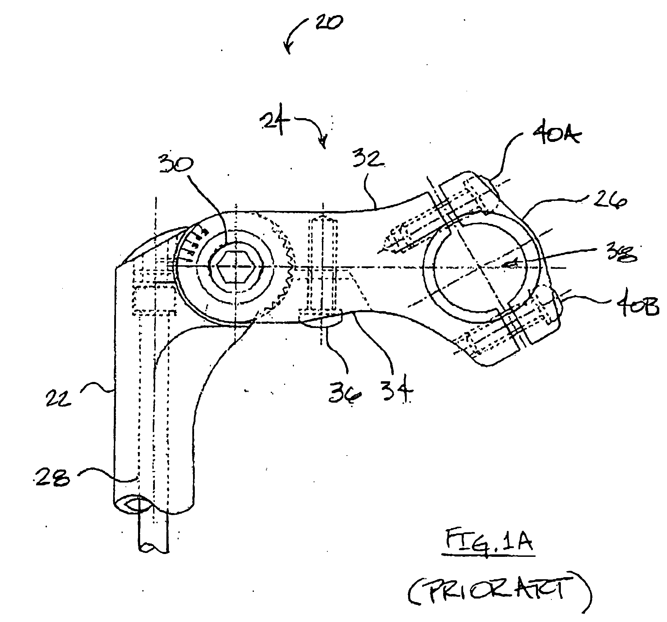

Fig. 1A is a side elevation view of a portion of a known bicycle stem 20. The stem 20 includes a quill 22, an extension member 24, and a clamp member 26. A lower end of an expander bolt 28 is passed through a hole in the quill 22 and threaded into a wedge (not shown). When the wedge is positioned in a steerer of a front fork assembly and the expander bolt 28 is tightened, the wedge expands and contacts an inside surface of a steerer, rigidly coupling the quill 22 to the steerer.

A bolt 30 attaches the quill 22 to the extension member 24. The extension member 24 includes a lateral member 32 and a locking member 34 that fits into a groove in an underside surface of the lateral member 32. A bolt 36 attaches the locking member 34 to the lateral member 32, and is used to fix an angle formed between the extension member 24 and the quill 22. An annular member of the quill 22 has teeth disposed on an outer edge and fits into a corresponding slot of the lateral member 32. The locking member 34 has teeth similar to those of the annular member arranged about an outer edge. When the bolt 36 is tightened, the teeth of the locking member 34 engage the teeth of the annular member of the quill 22, fixing the angle between the extension member 24 and the quill 22.

A front edge of the lateral member 32 and the clamp member 26 form a hole 38 for a handlebar. Bolts 40A and 40B are tightened to clamp the handlebar to the extension member 24 of the stem 20.

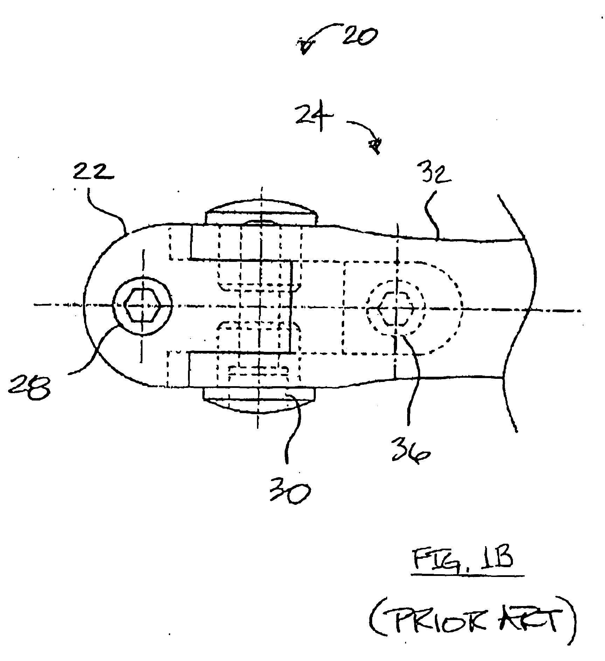

Fig. 1B is a top plan view of a portion of the bicycle stem 20 of Fig. 1.

In order to adjust the angle formed between the extension 24 and the quill 22 of the stem 20, a tool must first be used to loosen the bolts 30 and 36. Following adjustment of the angle, the tool must again be used to tighten the bolts 30 and 36. It would be advantageous to have a stem which does not require a tool to adjust the angle formed between the extension and the quill of the stem.

It is the object of the present invention to provide an improved angle adjustment of a bicycle stem. This object is achieved with the features of the claims.

The present invention provides a bicycle stem comprising a quill, an extension member, and a connecting mechanism for connecting said quill to said extension mechanism, wherein said connecting mechanism comprises a quick release mechanism.

According to a first preferred embodiment, said quick release mechanism comprises a quick release handle connected to a bolt. According to an alternative embodiment, said quick release mechanism comprises an Allen head bolt. Preferably, the bolt has a threaded end opposite the quick release handle or the Allen head, respectively.

The quill comprises an upper portion and a lower portion, wherein the upper portion is substantially annular and has two opposed sides. A hole extends between the two sides of the upper portion, and a recessed annular lip surrounds said hole on each side.

Preferably, the extension member comprises a slot for receiving said substantially annular upper portion of said quill.

According to a preferred embodiment of the bicycle stem, said extension member comprises two opposed sides, wherein a first hole extends from one side of said extension member into said slot, and wherein a second hole extends from the other side of said extension member into said slot. In its assembled condition, said first and second holes of said extension member are aligned with said hole of said upper portion.

In the bicycle stem of the present invention, the connecting mechanism preferably comprises a first locking hub and a second locking hub, said first locking hub being insertable into a corresponding hole of said extension member, and said second locking hub is insertable into another corresponding hole of said extension member. Preferably, said connecting mechanism comprises at least a first locking member, a second locking member, and a third locking member, wherein each of said first, second and third locking members comprises a cylindrical body with a disk-shaped flange at one end thereof, and further comprises a through-hole extending through said cylindrical body. Preferably, major surfaces of said disk-shaped flange comprise tooth-like projections formed thereon, said tooth-like projections extending radially outward from the centres of said major surfaces, said projections being oriented away from said major surfaces.

In the bicycle stem of the present invention, said first and second holes of said extension member are adapted to receive said cylindrical body of said third locking member such that said cylindrical body of said third locking member is positioned in said holes such that said disk-shaped flange contacts a surface of said extension member in said slot and about said hole.

Preferably, said hole in said upper portion is adapted to receive said cylindrical bodies of said first and second locking members, wherein said body of said first locking member is positioned in said hole such that said disk-shaped flange contacts said recessed annular lip surrounding said hole on the corresponding side of said upper portion.

Preferably, said first locking hub comprises a through-hole extending therethrough, and said second locking hub comprises a threaded through-hole extending therethrough, wherein said threaded end of said bolt, in its assembled condition, engages threads of said threaded hole in said locking hub.

More preferably, said body of said first locking member comprises a rib at an outer surface thereof that fits into a slot adjacent to said hole.

The accompanying drawings illustrate the present invention. In such drawings:
- Fig. 1A: is a side elevation view of a portion of a known bicycle stem;
- Fig. 1B: is a top plan view of a portion of the bicycle stem of Fig. 1;
- Fig. 2: is an exploded, perspective view of one embodiment of a bicycle stem including a mechanism for adjusting an angle formed between a lower portion of a quill and an extension member, wherein the mechanism is a quick release mechanism including a quick release handle connected to a bolt;
- Fig. 3: is a perspective view of the assembled stem of Fig. 2;
- Fig. 4: is a top plan view of the assembled stem of Fig. 2;
- Fig. 5: is a side elevation view of the assembled stem of Fig. 2 illustrating a range of an angle labelled "Φ" formed between the lower portion of the quill and the extension member; and
- Fig. 6: is an exploded, perspective view of an alternate embodiment of the bicycle stem of Fig. 2 absent the quick release handle.

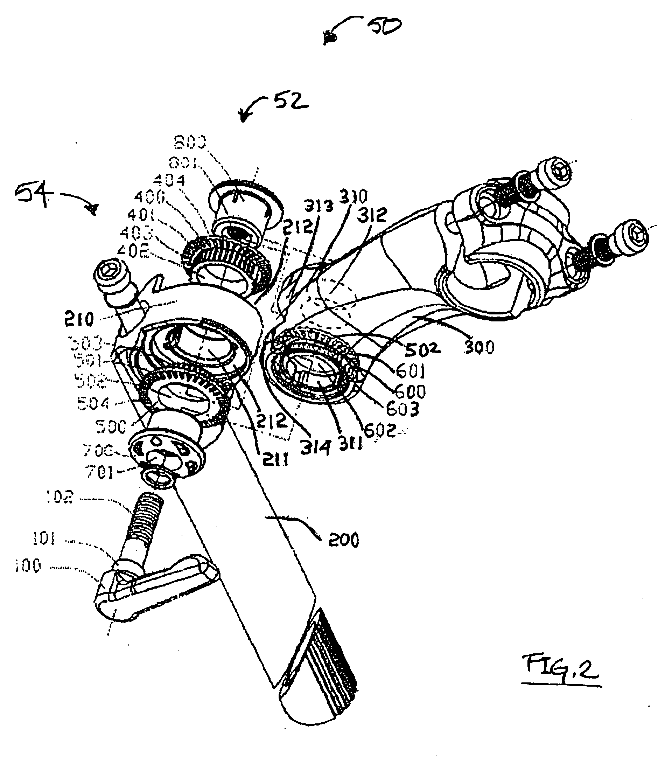

Fig. 2 is an exploded, perspective view of one embodiment of a bicycle stem 50 including a mechanism 52 for adjusting an angle formed between the lower portion 200 of a quill 54 and an extension member 300. In the embodiment of Fig. 2, the mechanism 52 is a quick release mechanism including a quick release handle 100 connected to a bolt 102.

The quill 54 includes an upper portion 210 and the lower portion 200. The upper portion 210 is substantially annular and has two opposed sides. A hole 211 extends between the two sides of the upper portion 210, and a recessed annular lip 212 surrounds the hole 211 on each side as indicated in Fig. 2.

The extension member 300 has a slot 310 for receiving the substantially annular upper portion 210 of the quill 54. The extension member 300 has two opposed sides. A first hole 311 extends from one side of the extension member 300 into the slot 310, and a second hole 312 extends from the other side of the extension member 300 into the slot 310.

The mechanism 52 for adjusting the angle between the lower portion 200 of the quill 54 and the extension member 300 includes first and second locking hubs 700 and 800 and first, second and third locking members 400, 500 and 600. The locking members 400, 500 and 600 are substantially similar. The first locking member 400 has a cylindrical body 403 with a disk-shaped flange 401 at one end. A hole 402 extends through the body 403. The second and third locking members 500 and 600 have respective cylindrical bodies 503 and 603 with respective disk-shaped flanges 501 and 601 at one end. Holes 502 and 602 extend through the respective bodies 503 and 603.

As shown in Fig. 2, major surfaces of the disk-shaped flanges 501 and 501 have tooth-like projections (i.e. ribs) formed thereon. The tooth-like projections extend radially outward from centres of the major surfaces, and the projections are oriented away from the major surfaces. As described below, the tooth-like projections of the flanges 501 und 601 engage (i.e. mesh) in assembly of the stem 50 such that an angle formed between the lower portion 200 of the quill 54 and the extension member 300 is fixed.

Major surfaces of the disk-shaped flange 401 and a disk-shaped flange of a corresponding locking member (not shown) have similar tooth-like projections (i.e. ribs) formed thereon. The tooth-like projections of the disk-shaped flange 401 and the corresponding flange also mesh during assembly such that the angle formed between the lower portion 200 of the quill 54 and the extension member 300 is fixed.

As shown in Fig. 2, the third locking member 600 is installed in the slot 310 of the extension member 300. The hole 311 in the extension member 300 is adapted to receive the cylindrical body 603 of the third locking member 600. The body 603 of the third locking member 600 is positioned in the hole 311 such that the disk-shaped flange 601 contacts the surface of the extension member 300 in the slot 310 and about the hole 311. A similar locking member (not shown) is installed in the hole 312 on the opposite side of the extension member 300.

In the embodiment of Fig. 2, the extension member 300 has a slot adjacent to the hole 311, and the body 603 of the third locking member 600 has a rib attached to an outer surface that fits into the slot adjacent to the hole 311. When the body 603 is positioned in the hole 311, the rib of the body 603 fits into the slot adjacent to the hole 311 such that the body 603 cannot turn within the hole 311.

Similarly, the body of the locking member positioned in the hole 312 on the opposite side of the extension member 300 has a rib attached to an outer surface that fits into the slot adjacent to the hole 312. When the body is positioned in the hole 312, the rib fits into the slot such that the body cannot turn within the hole 312.

As shown in Fig. 2, the first and second locking members 400 and 500 are installed in the corresponding opposite sides of the upper portion 210 of the quill 54. The hole 211 in the upper portion 210 is adapted to receive the cylindrical bodies 403 and 503 of the respective first and second locking members 400 and 500. The body 403 of the locking member 400 is positioned in the hole 211 such that the disk-shaped flange 401 contacts the recessed annular lip 212 surrounding the hole 211 on the corresponding side of the upper portion 210.

In the embodiment of Fig. 2, the upper portion 210 of the quill 54 has a slot adjacent to the hole 211, and the body 403 of the first locking member 400 has a rib attached to an outer surface that fits into the slot adjacent to the hole 211. When the body 403 is positioned in the hole 211, the rib of the body fits into the slot adjacent to the hole 211 such that the body cannot turn within the hole 211.

Similarly, the body 503 of the second locking member is positioned in the hole 211 such that the disk-shaped flange 501 contacts the recessed annular lip surrounding the hole 211 on the opposite side of the upper portion 210. In the embodiment of Fig. 2, the body 503 has a rib attached to an outer surface that fits into the slot adjacent to the hole 211. When the body is positioned in the hole 211, the rib of the body 503 fits into the slot such that the body 503 cannot turn within the hole 211.

In assembly, the upper portion 210 of the quill 54 is inserted into the slot 310 of the extension member 300 such that the first and second holes 311 and 312 of the extension member 300 are aligned with the hole 211 of the upper portion 210. The first locking hub 700 is inserted into the corresponding hole 311 of the extension member 300, and the second locking hub 800 is inserted into the corresponding hole 312 of the extension member 300.

The quick release handle 100 is connected to the bolt 102 by a connecting member 101. The bolt 102 has a threaded end opposite the handle 100. The first locking hub 700 has a hole 710 extending therethrough, and the second locking hub 800 has a threaded hole 801 extending therethrough. In assembly, the threaded end of the bolt 102 is inserted through the hole 701 in the locking hub 700, through the hole 311 in the extension member 300, through the hole 211 in the upper portion 210 of the quill 54, through the hole 312 in the extension member 300, and engages threads of the threaded hole 801 in the locking hub 800.

When the bolt 102 is tightened (e.g., using the handle 100), the tooth-like projections of the flanges 501 and 601 engage ( i.e. mesh) such that the angle formed between the lower portion 200 of the quill 54 and the extension member 300 is fixed. At the same time, the tooth-like projections of the flange 401 and the corresponding flange also mesh such that he angle formed between the lower portion 200 of the quill 54 and the extension member 300 is fixed.

When the bolt 102 is loosened (e.g., using the handle 100), the tooth-like projections of the flanges 501 and 601, as well as the flange 401 and the corresponding flange, disengage such that the angle formed between the lower portion 200 of the quill 54 and the extension member 300 may be adjusted.

The first, second and third locking members 400, 500 and 600 are preferably made of hard metal such as steel. The quill 54 and the extension member 300 are preferably made of a material that is softer than the material used to form the locking members 400, 500 and 600 (e.g. an aluminium alloy). When the locking members 400, 500 and 600 are fitted into the stem 54 and extension member 300 and the bolt 102 is tightened, the adjustable angle formed between the lower portion 200 of the quill 54 and the extension member 300 is fixed, and the stem 54 is structurally rigid. It is noted that no tools are required to adjust the angle between the lower portion 200 of the quill 54 and the extension member 300, and the adjustment can be made quickly and easily.

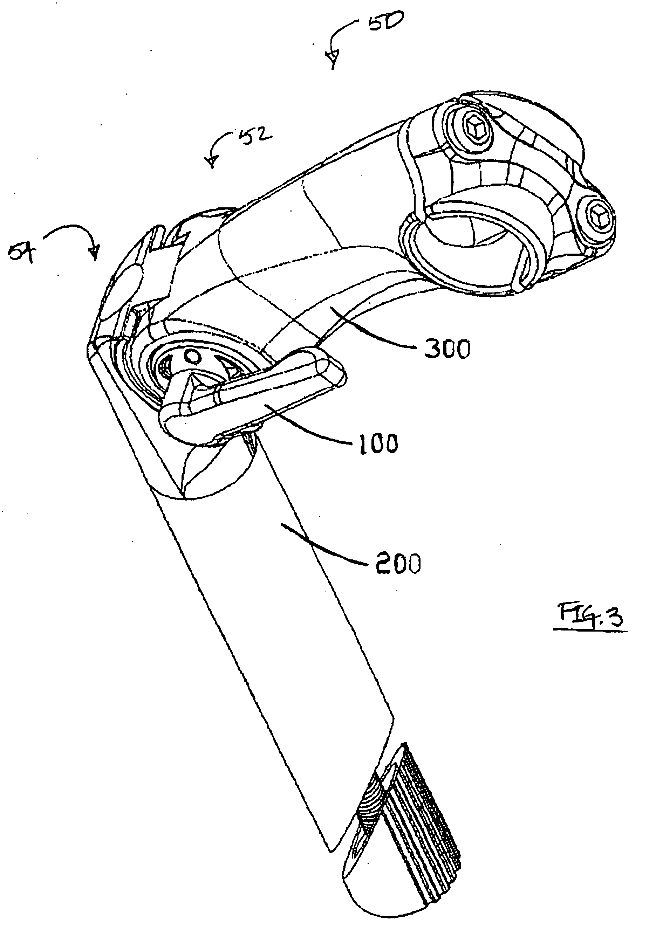

Fig. 3 is a perspective view of the assembled stem of Fig. 2. In the perspective view of the assembled stem 50 shown in Fig. 3, it can be clearly seen how the upper portion of the bicycle stem, and in particular its annular portion is accommodated in the slot of the extension member 300. Furthermore, the quick release handle 100 is shown with which the secure connection between the quill 54 and the extension member 300 can be released in order to adjust the angle between the quill 54 and the extension member 300.

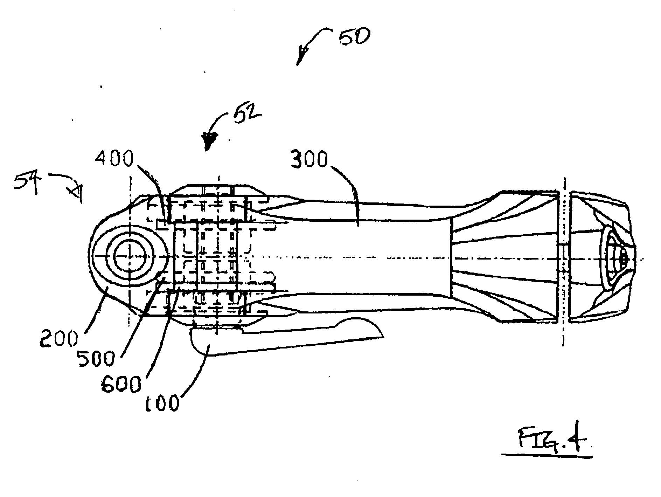

Fig. 4 is a top plan view of the assembled stem 50 of Fig. 2. In this figure, it is again shown how the upper annular portion of quill 54 is accommodated in the slit of the extension member 300. Moreover, with dashed lines, the first, second and third locking members 400, 500 and 600 are shown, and in particular its arrangement within the holes provided in the extension member 300 and in the upper portion of the quill 54, respectively. Upon release of the quick release handle 100, the angle between the quill 54 and the extension member 300 can be adjusted by the user.

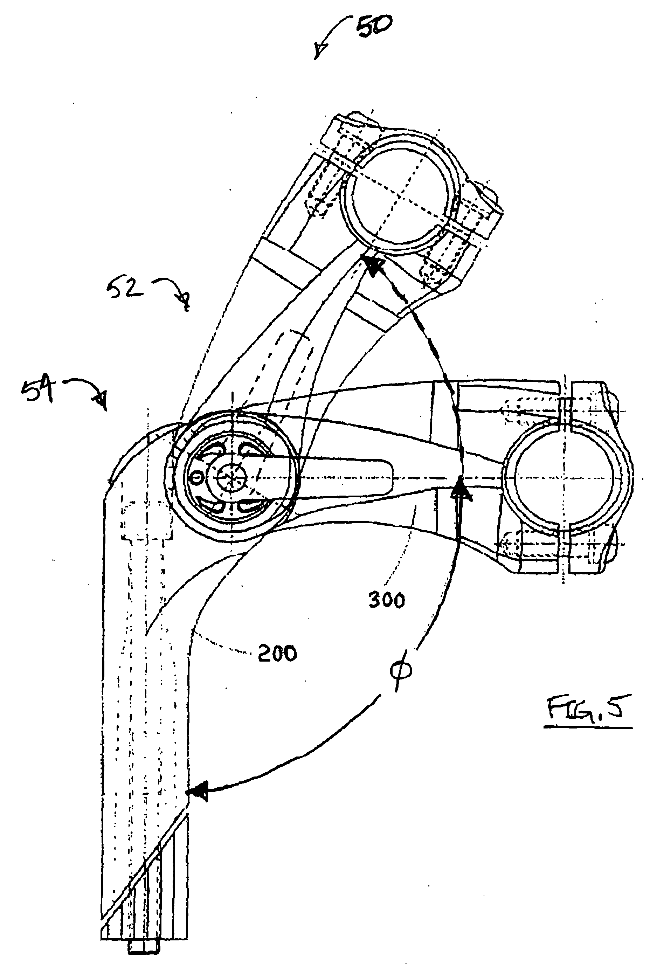

Fig. 5 has a side elevation view of the assembled stem 50 of Fig. 2 illustrating a range of the angle, labelled "Φ" in Fig. 5, formed between the lower portion 200 of the quill 54 and the extension member 300.

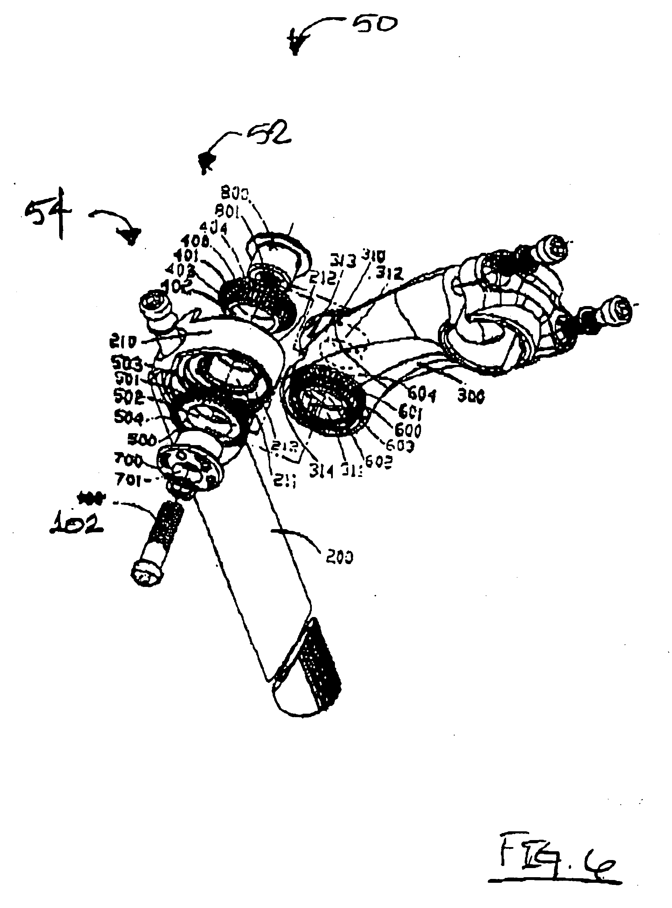

Fig. 6 is an exploded, perspective view if an alternate embodiment of the bicycle stem 50 of Fig. 2 absent the quick release handle 100 and wherein the bolt 102 is adapted to receive a tool. The embodiment of Fig. 6 may be desirable where theft and/or vandalism is a concern. In the embodiment of Fig. 6, the bolt 102 is an Allen head bolt, and an Alien wrench is needed to loosen and tighten the Allen head bolt 102 in order to adjust the angle between the lower portion 200 of the quill 54 and the extension member 300.

## Claims

1. Bicycle stem (50) comprising
a quill (54),
an extension member (300), and
a connecting mechanism (52) for connecting said quill (54) to said extension
mechanism (300),
**characterised in that** said connecting mechanism (52) comprises a quick release mechanism.

2. The bicycle stem of claim 1, wherein said quick release mechanism comprises a quick release handle (100) connected to a bolt (102).

3. The bicycle stem of claim 1, wherein the quick release mechanism comprises an Allen head bolt (102).

4. The bicycle stem of claims 2 or 3, wherein the bolt (102) has a threaded end opposite the quick release handle (100) or the Allen head, respectively.

5. The bicycle stem of any of the preceding claims, wherein the quill (54) comprises an upper portion (210) and a lower portion (200), wherein the upper portion (210) is substantially annular and has two opposed sides.

6. The bicycle stem of claim 5, wherein a hole (211) extends between the two sides of the upper portion (210), and a recessed annular lip (212) surrounds said hole (211) on each side.

7. The bicycle stem of claim 5 or 6, wherein the extension member (300) comprises a slot (310) for receiving said substantially annular upper portion (210) of said quill (54).

8. The bicycle stem of claim 7, wherein said extension member (300) comprises two opposed sides, and wherein a first hole (311) extends from one side of said extension member (300) into said slot (310), and wherein a second hole (312) extends from the other side of said extension member (300) into said slot (310).

9. The bicycle stem of claim 8, wherein, in its assembled condition, said first and second holes (311, 312) of said extension member (300) are aligned with said hole (211) of said upper portion (210).

10. The bicycle stem of any of the preceding claims, wherein the connecting mechanism (52) comprises a first locking hub (700) and a second locking hub (800), said first locking hub (700) being insertable into corresponding hole (311) of said extension member (300), and said second locking hub (800) being insertable into corresponding hole (312) of said extension member (300).

11. The bicycle stem of any of the preceding claims, wherein said connecting mechanism (52) comprises at least a first locking member (400), a second locking member (500), and a third locking member (600).

12. The bicycle stem of claim 11, wherein each of said first, second and third locking members (400, 500, 600) comprises a cylindrical body (403, 503, 603) with a disk-shaped flange (410, 501, 601) at one end thereof, and further comprises a through-hole (402, 502, 602) extending through said cylindrical body (403, 503, 603).

13. The bicycle stem of claim 12, wherein major surfaces of said disk-shaped flange (401, 501, 601) comprise tooth-like projections formed thereon, said tooth-like projections extending radially outward from the centres of said major surfaces, said projections being oriented away from said major surfaces.

14. The bicycle stem of claim 12 or 13, wherein said first and second holes (311, 312) of said extension member (300) are adapted to receive said cylindrical body (603) of said third locking member (600) such that said cylindrical body (603) of said third locking member (600) is positioned in said holes such that said disk-shaped flange (601) contacts a surface of said extension member (300) in said slot (310) and about said hole (311).

15. The bicycle stem of claim 12, 13 or 14, wherein said hole (211) in said upper portion (210) is adapted to receive said cylindrical bodies (403, 503) of said first and second locking members (400, 500), wherein said body (403) of said first locking member (400) is positioned in said hole (211) such that said disk-shaped flange (401) contacts said recessed annular lip (212) surrounding said hole (211) on the corresponding side of said upper portion (210).

16. The bicycle stem of any of claims 10-15, wherein said first locking hub (700) comprises a through-hole (701) extending therethrough, and second locking hub (800) comprises a threaded through-hole (801) extending therethrough.

17. The bicycle stem of claim 16, wherein said threaded end of said bolt (102), in its assembled condition, engages threads of said threaded hole (801) in said locking hub (800).

18. The bicycle stem of any of claims 12-17, wherein said body 403 of said first locking member (400) comprises a rib at an outer surface thereof that fits into a slot adjacent to said hole (211).
